# EUROPEAN PATENT SPECIFICATION

(11) **EP 3 906 500 B1**
(45) Date of publication and mention of the grant of the patent: **21.05.2025**
(21) Application number: 19832122.6
(22) Date of filing: 20.12.2019
(51) Int. Cl.: G06N 3/045, G06N 3/08, G06V 10/82, G06V 20/56

(54) **DETERMINING WHETHER IMAGE DATA IS WITHIN A PREDETERMINED RANGE THAT IMAGE ANALYSIS SOFTWARE IS CONFIGURED TO ANALYZE**
BESTIMMUNG, OB BILDDATEN INNERHALB EINES VORBESTIMMTEN BEREICHS LIEGEN, DEN DIE BILDANALYSESOFTWARE KONFIGURATIONSGEMÄSS ANALYSIERT
DÉTERMINATION DE LA PRÉSENCE OU NON DE DONNÉES D'IMAGE DANS UNE PLAGE PRÉDÉTERMINÉE POUR FAIRE L'OBJET D'UNE ANALYSE PAR UN LOGICIEL D'ANALYSE D'IMAGE CONFIGURÉ À CET EFFET

(30) Priority: 31.12.2018 US 201862786590 P; 26.02.2019 US 201916286191
(43) Date of publication of application: 10.11.2021
(73) Proprietor: Robert Bosch GmbH, 70442 Stuttgart (DE)
(72) Inventor: CHINNI, Krishna, Canton, MI, Michigan 48188 (US)
(86) International application number: PCT/EP2019/086774
(87) International publication number: WO 2020/141121

(56) References cited:
- IAN J GOODFELLOW ET AL: "Explaining and Harnessing Adversarial Examples", 20 March 2015 (2015-03-20), XP055535149, Retrieved from the Internet <URL:https://arxiv.org/pdf/1412.6572.pdf> [retrieved on 20181217]
- VASISHT DUDDU ET AL: "A Survey of Adversarial Machine Learning in Cyber Warfare", DEFENCE SCIENCE JOURNAL, vol. 68, no. 4, 25 June 2018 (2018-06-25), pages 356 - 366, XP055677836
- WEILIN XU ET AL: "Feature Squeezing: Detecting Adversarial Examples in Deep Neural Networks", ARXIV.ORG, CORNELL UNIVERSITY LIBRARY, 201 OLIN LIBRARY CORNELL UNIVERSITY ITHACA, NY 14853, 4 April 2017 (2017-04-04), XP080760758, DOI: 10.14722/NDSS.2018.23198

## Description

This application claims priority to U.S. Provisional Patent Application No. 62/786,590, filed December 31, 2018.

Non-patent Literature "Explaining and Harnessing Adversarial Examples" provides several machine learning models, including neural networks, consistently misclassify adversarial examples-inputs formed by applying small but intentionally worst-case perturbations to examples from the dataset, such that the perturbed input results in the model outputting an incorrect answer with high confidence.

Non-patent Literature "A Survey of Adversarial Machine Learning in Cyber Warfare" provides threat models for Machine Learning systems and describe the various techniques to attack and defend them.

Non-patent Literature "Feature Squeezing: Detecting Adversarial Examples in Deep Neural Networks" provides a model that can be used to harden DNN models by detecting adversarial examples.

### SUMMARY

Image sensors are an important component in autonomous and partially autonomous driving systems. However, in some situations image data from image sensors may be incorrectly analyzed. In, for example, situations such as adverse weather conditions (for example, rain), low light, and direct light from the sun, image analysis software may incorrectly generate a prediction regarding the existence of objects in an image, the location of objects in the image, the existence of road markings in an image, the location of road markings in the image, or a combination of the foregoing. The reason the image analysis software makes an incorrect determination in some situations is that the image analysis software has not been configured to analyze image data obtained in these situations. Therefore, in some embodiments, it is desirable that image data be ignored when the image data received from a camera is obtained in a situation that the image analysis software is not configured to analyze. In some embodiments, it is desirable that at least some autonomous functionality of a vehicle be disabled when the image data received from a camera is obtained in a situation that the image analysis software is not configured to analyze. Embodiments herein describe a method and system for detecting whether received image data was obtained in a situation that image analysis software is not configured to analyze.

The present invention provides a system for determining whether image data is within a predetermined range that image analysis software is configured to analyze, as defined by independent claim 1. The system includes a camera and an electronic processor. The electronic processor is configured to receive the image data from the camera and, use the image analysis software, generate a prediction regarding the image data and a confidence value associated with the prediction regarding the image data. The electronic processor is configured to calculate perturbation values by determining a sign of a gradient of a cost function (∇ₓL(θ, x, y)) of the image analysis software used to generate the prediction with respect to the image. The electronic processor is configured to multiply a weight (ε) by the sign, wherein x is the input image data, y is possible classifications for the image data, and *θ* are parameters of the image analysis software used to generate the prediction. The electronic processor is also configured to perturb the image data using perturbation values, use the image analysis software, generate a prediction regarding the perturbed image data and a confidence value associated with the prediction regarding the perturbed image data. The electronic processor is further configured to compare the confidence value associated with the prediction regarding the perturbed image data to the confidence value associated with the prediction regarding the image data. When the difference between the confidence value associated with the prediction regarding the perturbed image data and the confidence value associated with the prediction regarding the image data is bigger than or equal to a predetermined threshold value, the electronic processor is configured to determine that the image data received from the camera lies inside the predetermined range. The image analysis software comprises a machine learning software trained to analyze the image data and the machine learning software comprises a convolutional neural network.

The present invention provides a method of determining whether image data is within a predetermined range that image analysis software is configured to analyze, as defined by independent claim 4. The method includes receiving, with an electronic processor, the image data from the camera and, using the image analysis software, generating a prediction regarding the image data and a confidence value associated with the prediction regarding the image data. The method also includes calculating perturbation values by determining a sign of a gradient of a cost function (∇ₓL(θ, x, y)) of the image analysis software used to generate the prediction with respect to the image and multiplying a weight (ε) by the sign, wherein *x* is the input image data, *y* is possible classifications for the image data, and *θ* are parameters of the image analysis software used to generate the prediction. The method also includes perturbing the image data using perturbation values, using the image analysis software, generating a prediction regarding the perturbed image data and a confidence value associated with the prediction regarding the perturbed image data. The method further includes comparing, with the electronic processor, the confidence value associated with the prediction regarding the perturbed image data to the confidence value associated with the prediction regarding the image data. The method also includes determining that the image data received from the camera lies inside the predetermined range when the difference between the confidence value associated with the prediction regarding the perturbed image data and the confidence value associated with the prediction regarding the image data is bigger than or equal to a predetermined threshold value. The image analysis software comprises a machine learning software trained to analyze the image data and the machine learning software comprises a convolutional neural network

Other aspects, features, and embodiments will become apparent by consideration of the detailed description and accompanying drawings.

### BRIEF DESCRIPTION OF THE DRAWINGS

FIG. 1 is a block diagram of a system for determining whether image data is within a predetermined range that image analysis software is configured to analyze according to some embodiments.
FIG. 2 is a block diagram of an electronic controller of the system of FIG. 1 according to some embodiments.
FIG. 3 a flowchart of a method for using the system of FIG. 1 to determine whether image data is within a predetermined range that image analysis software is configured to analyze according to some embodiments.

### DETAILED DESCRIPTION

Before any embodiments are explained in detail, it is to be understood that this disclosure is not intended to be limited in its application to the details of construction and the arrangement of components set forth in the following description or illustrated in the following drawings. Embodiments are capable of other configurations and of being practiced or of being carried out in various ways.

A plurality of hardware and software based devices, as well as a plurality of different structural components may be used to implement various embodiments. In addition, embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic based aspects of the invention may be implemented in software (for example, stored on non-transitory computer-readable medium) executable by one or more processors. For example, "control units" and "controllers" described in the specification can include one or more electronic processors, one or more memory modules including non-transitory computer-readable medium, one or more input/output interfaces, one or more application specific integrated circuits (ASICs), and various connections (for example, a system bus) connecting the various components.

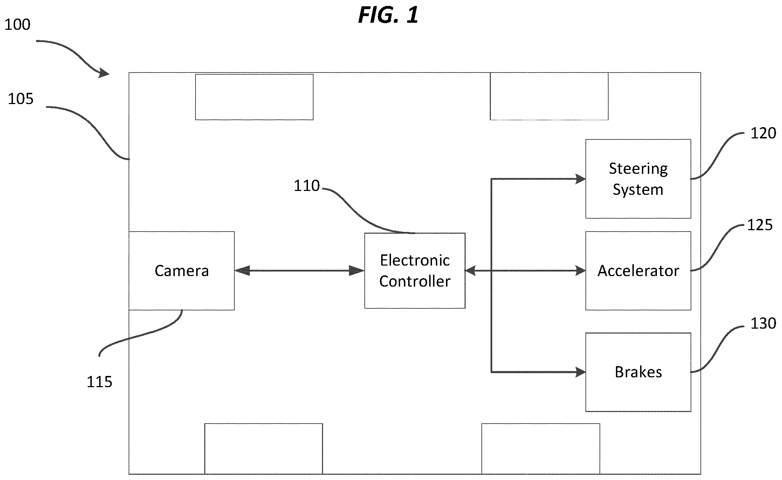

FIG. 1 illustrates a system 100 for determining whether image data is within a predetermined range that image analysis software is configured to analyze. The system 100 includes a vehicle 105. The vehicle 105, although illustrated as a four-wheeled vehicle, may encompass various types and designs of vehicles. For example, the vehicle 105 may be an automobile, a motorcycle, a truck, a bus, a semi-tractor, and others. In the example illustrated, the vehicle 105 includes an electronic controller 110, a camera 115, a steering system 120, an accelerator 125, and brakes 130. The components of the vehicle 105 may be of various constructions and may use various communication types and protocols.

The electronic controller 110 may be communicatively connected to the camera 115, steering system 120, accelerator 125, and brakes 130 via various wired or wireless connections. For example, in some embodiments, the electronic controller 110 is directly coupled via a dedicated wire to each of the above-listed components of the vehicle 105. In other embodiments, the electronic controller 110 is communicatively coupled to one or more of the components via a shared communication link such as a vehicle communication bus (for example, a controller area network (CAN) bus) or a wireless connection.

Each of the components of the vehicle 105 may communicate with the electronic controller 110 using various communication protocols. The embodiment illustrated in FIG. 1 provides but one example of the components and connections of the vehicle 105. However, these components and connections may be constructed in other ways than those illustrated and described herein. For example, it should be understood that the electronic controller 110 may include one or more cameras than the single camera 115 illustrated in FIG. 1 and that the cameras included in the vehicle 105 may be installed at various locations on the interior and exterior of the vehicle 105.

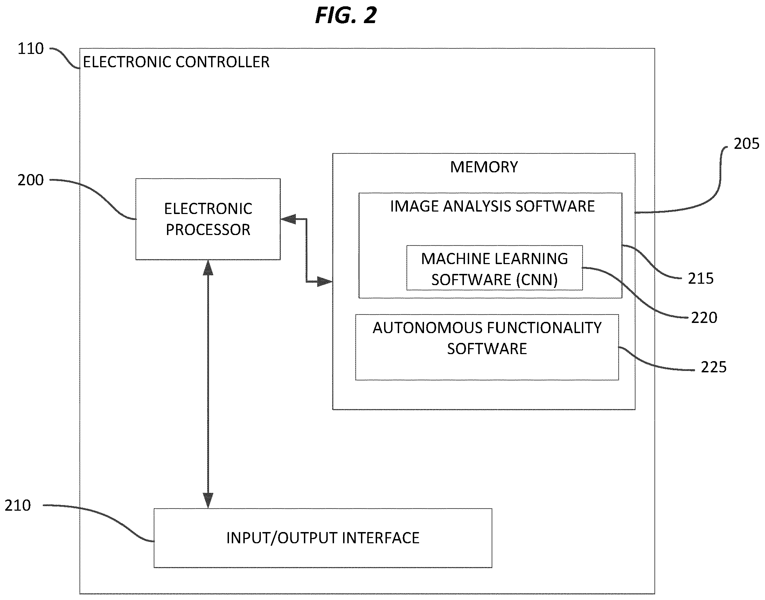

FIG. 2 is a block diagram of the electronic controller 110 of the vehicle 105. The electronic controller 110 includes a plurality of electrical and electronic components that provide power, operation control, and protection to the components and modules within the electronic controller 110. The electronic controller 110 includes, among other things, an electronic processor 200 (such as a programmable electronic microprocessor, microcontroller, or similar device), a memory 205 (for example, non-transitory, machine readable memory), and an input/output interface 210. The electronic processor 200 is communicatively connected to the memory 205 and the input/output interface 210. The electronic processor 200, in coordination with the memory 205 and the input/output interface 210, is configured to implement, among other things, the methods described herein.

As will be described in further detail below, the memory 205 includes computer executable instructions (or software) for determining, among other things, whether image data is within a predetermined range (obtained in a situation) that image analysis software is trained to analyze. In the example illustrated in FIG. 2, the memory 205 includes image analysis software 215 including a convolutional neural network (CNN) 220 (or, more broadly machine learning software) and autonomous functionality software 225. The CNN 220 is trained to make predictions related to detecting and classifying objects, road markings, road signs, and the like in image data received from the camera 115. The autonomous functionality software 225 relies on predictions made by the image analysis software 215 (for example, the CNN 220) using the image data from the camera 115 to provide autonomous functionality to the vehicle 105 by controlling the steering system 120, accelerator 125, and brakes 130, among other things. The autonomous functionality software 225 may be, for example, automated cruise control (ACC), an automatic braking system, an automated parking system, or the like. It should be understood that the memory 205 may include more, fewer, or different software components than those illustrated in FIG. 2. While described herein as including a CNN it should be noted that the image analysis software 215 may include a different type of machine learning software, for example, a decision tree or a Bayesian network. In some embodiments, the image analysis software 215 may not include machine learning software.

The electronic controller 110 may be implemented in several independent controllers (for example, programmable electronic controllers) each configured to perform specific functions or sub-functions. Additionally, the electronic controller 110 may contain sub-modules that include additional electronic processors, memory, or application specific integrated circuits (ASICs) for handling input/output functions, processing of signals, and application of the methods listed below. In other embodiments, the electronic controller 110 includes additional, fewer, or different components.

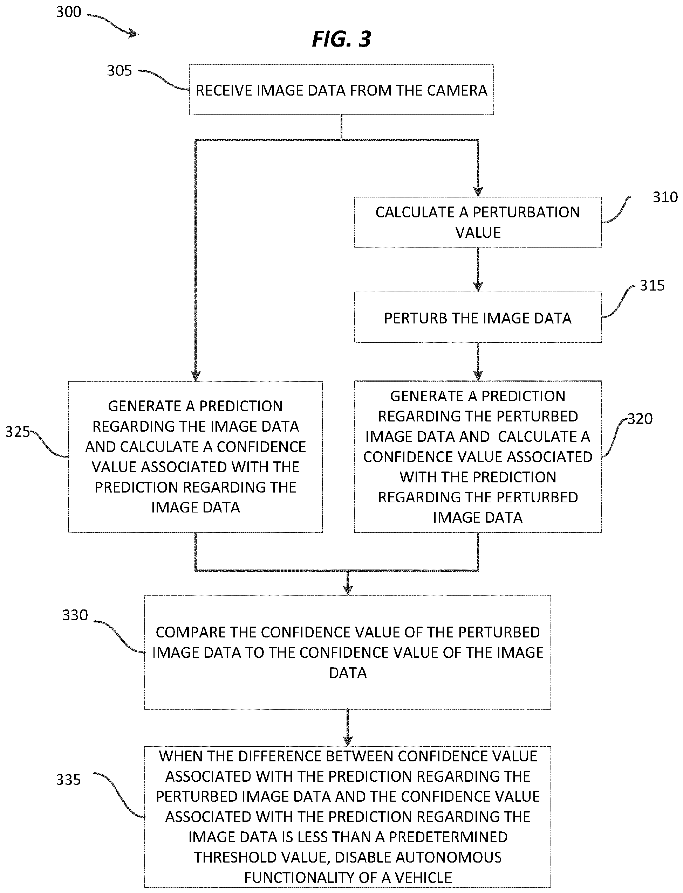

FIG. 3 illustrates the method 300 for determining whether image data is within a predetermined range that image analysis software is configured to analyze. The method 300 is performed by the electronic processor 200 executing the image analysis software 215. It should be understood that while the example method 300 is described below in terms of a CNN trained to analyze image data, the method 300 more generally applies to image analysis software configured to analyze image data. At step 305, the electronic processor 200 receives image data from the camera 115. At step 310, the electronic processor 200 calculates a perturbation value that is specific to the CNN 220 and received image data. A perturbation value is a value that, when added to the image data, alters the image data, effectively creating noise in the image data. The electronic processor 200 calculates the perturbation value using the gradient of a cost function of the CNN 220. The cost function is defined as *L*(*θ, x, y*), where *x* is the input image data, *y* is possible classifications for the image data, and *θ* is values of weights included in the CNN 220. The perturbation value is determined to be the result of determining the sign (positive or negative) of the gradient of the cost function (∇ₓL(θ, x, y)) multiplied by a weight ε. At step 315, the image data is perturbed using the perturbation value (the perturbation value is added to each pixel of the image data). At step 320, the electronic processor 200 executes the CNN 220 to generate a prediction for the perturbed image data (classifying the perturbed image data into one of a plurality of categories). For example, the CNN 220 may determine if a lane marking on the right side of a vehicle 105 is solid or dashed. When the electronic processor 200 generates a prediction, the prediction is associated with a confidence value. The confidence value represents the likelihood that the prediction is correct.

At step 325, the electronic processor 200 also executes the CNN 220 to generate a prediction regarding the image data (classifies the image data into one of a plurality of categories) and determines a confidence value associated with the prediction regarding the image data. It should be noted that while step 325 is illustrated in FIG. 3 as being performed in parallel to steps 310-320, in some embodiments these steps may be performed sequentially.

At step 330, the electronic processor 200 compares the confidence value associated with the prediction made based on the perturbed image data to the confidence value associated with the prediction made based on the unperturbed image data. At step 335, when the difference between the confidence values is less than a predetermined threshold, the electronic processor 200 determines that the image data received from the camera 115 lies outside of the predetermined range that the CNN 220 is trained to analyze. When the image data received from the camera 115 lies outside of the predetermined range that the CNN 220 is trained to analyze, the electronic processor 200 determines the prediction made by the CNN 220 is unreliable. In some embodiments, when the image data received from the camera 115 lies outside of the predetermined range that the CNN 220 is trained to analyze and the autonomous functionality software 225 relies on the prediction generated by the CNN 220, the electronic processor 200 disables autonomous functionality of the vehicle 105 controlled by the autonomous functionality software 225.

In other embodiments, rather than disabling the autonomous functionality software 225 when the image data received from the camera 115 lies outside of the predetermined range that the CNN 220 is trained to analyze, the electronic processor 200 ignores (disregards) the image data from the camera 115. In the case that the electronic processor 200 ignores the image data from the camera 115, the electronic processor 200 uses data from alternative sensors to generate predictions with the CNN 220 (or other types of software) and execute the autonomous functionality of the autonomous functionality software 225. Examples of data from alternate sensors include image data from other cameras or data from sensors such as radar sensors, LIDAR sensors, ultrasonic sensors, and the like.

It should be understood that the image analysis software 215 may include more than one CNN and that each CNN may be trained to detect something different in received image data. For example, one CNN may be trained to detect road markings (for example, lane markers) while another CNN is trained to detect objects such as people, animals, and vehicles. In some embodiments, when image data is determined to be outside the predetermined range a CNN is trained to analyze, the autonomous functionality controlled by the autonomous functionality software 225 is disabled regardless of whether or not the autonomous functionality software 225 relies on predictions that a CNN is making based on the image data.

In this document, relational terms such as first and second, top and bottom, and the like may be used solely to distinguish one entity or action from another entity or action without necessarily requiring or implying any actual such relationship or order between such entities or actions. The terms "comprises," "comprising," "has," "having," "includes," "including," "contains," "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ...a," "has ...a," "includes ...a," or "contains ...a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially," "essentially," "approximately," "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "coupled" as used herein is defined as connected, although not necessarily directly and not necessarily mechanically. A device or structure that is "configured" in a certain way is configured in at least that way, but may also be configured in ways that are not listed.

Various features, advantages, and embodiments are set forth in the following claims.

## Claims

1. A system (100) for determining whether image data is within a predetermined range that image analysis software (215) is configured to analyze, the system (100) comprising:
a camera (115); and
an electronic processor (200), the electronic processor (200) configured to:
receive the image data from the camera (115);
use the image analysis software (215), generate a prediction regarding the image data and a confidence value associated with the prediction regarding the image data;
calculate perturbation values by determining a sign of a gradient of a cost function (∇ₓL(θ, x, y)) of the image analysis software (215) used to generate the prediction with respect to the image;
multiply a weight (*ε*) by the sign, wherein *x* is the input image data, *y* is possible classifications for the image data, and *θ* are parameters of the image analysis software used to generate the prediction;
perturb the image data using the perturbation values;
use the image analysis software (215), generate a prediction regarding the perturbed image data and a confidence value associated with the prediction regarding the perturbed image data;
compare the confidence value associated with the prediction regarding the perturbed image data to the confidence value associated with the prediction regarding the image data; and
when a difference between the confidence value associated with the prediction regarding the perturbed image data and the confidence value associated with the prediction regarding the image data is bigger than or equal to a predetermined threshold value, determine that the image data received from the camera (215) lies inside the predetermined range,
wherein the image analysis software (215) comprises a machine learning software (220) trained to analyze the image data and the machine learning software (220) comprises a convolutional neural network.

2. The system (100) according to claim 1, wherein the electronic processor (200) is configured to, when the image data lies outside of the predetermined range and an autonomous functionality of a vehicle (105) relies on the prediction regarding the image data, disable the autonomous functionality.

3. The system (100) according to claim 1, wherein predictions generated by the image analysis software (215) relate to detecting and classifying objects, road signs, and road markings in the image data.

4. A method of determining whether image data is within a predetermined range that image analysis software (215) is configured to analyze, the method comprising:
receiving, with an electronic processor (200), the image data from the camera (115);
using the image analysis software (215), generating a prediction regarding the image data and a confidence value associated with the prediction regarding the image data;
calculating perturbation values by determining a sign of a gradient of a cost function (∇ₓL(θ, x, y)) of the image analysis software (215) used to generate the prediction with respect to the image; and
multiplying a weight (ε) by the sign, wherein *x* is the input image data, *y* is possible classifications for the image data, and *θ* are parameters of the image analysis software used to generate the prediction;
perturbing the image data using the perturbation values;
using the image analysis software (215), generating a prediction regarding the perturbed image data and a confidence value associated with the prediction regarding the perturbed image data;
comparing, with the electronic processor (200), the confidence value associated with the prediction regarding the perturbed image data to the confidence value associated with the prediction regarding the image data; and
when a difference between the confidence value associated with the prediction regarding the perturbed image data and the confidence value associated with the prediction regarding the image data is bigger than or equal to a predetermined threshold value, determining that the image data received from the camera (115) lies inside the predetermined range,
wherein the image analysis software (215) comprises a machine learning software (220) trained to analyze the image data and the machine learning software (220) comprises a convolutional neural network.

5. The method according to claim 4, the method further comprising when the difference between the confidence value associated with the prediction regarding the perturbed image data and the confidence value associated with the prediction regarding the image data is less than the predetermined threshold value, ignoring image data from the camera (115).

6. The method according to claim 4, the method further comprising using data from alternative sensors to generate predictions to control autonomous functionality of a vehicle (105), when the image data lies outside of the predetermined range.

7. The method according to claim 4, wherein predictions generated by the image analysis software (215) relate to detecting and classifying objects, road signs, and road markings in the image data.

## Patentansprüche

1. System (100) zum Ermitteln, ob Bilddaten innerhalb eines vorbestimmten Bereichs liegen, für den eine Bildanalysesoftware (215) zum Analysieren konfiguriert ist, wobei das System (100) umfasst:
eine Kamera (115); und
einen elektronischen Prozessor (200), wobei der elektronische Prozessor (200) konfiguriert ist zum:
Empfangen der Bilddaten von der Kamera (115);
Verwenden der Bildanalysesoftware (215) zum Erzeugen einer Vorhersage hinsichtlich der Bilddaten und eines Vertrauenswertes, der mit der Vorhersage hinsichtlich der Bilddaten assoziiert ist;
Berechnen von Störungswerten, indem ein Vorzeichen eines Gradienten einer Kostenfunktion (∇ₓL(θ, x, y)) der Bildanalysesoftware (215) verwendet wird zum Erzeugen der Vorhersage in Bezug auf das Bild;
Multiplizieren einer Gewichtung (ε) mit dem Vorzeichen, wobei *x* die Eingangsbilddaten sind, *y* mögliche Klassifizierungen für die Bilddaten sind, und *θ* Parameter der Bildanalysesoftware sind, die verwendet werden, um die Vorhersage zu erzeugen;
Stören der Bilddaten unter Verwendung der Störungswerte;
Verwenden der Bildanalysesoftware (215) zum Erzeugen einer Vorhersage hinsichtlich der gestörten Bilddaten und eines Vertrauenswertes, der mit der Vorhersage hinsichtlich der gestörten Bilddaten assoziiert ist;
Vergleichen des Vertrauenswertes, der mit der Vorhersage hinsichtlich der gestörten Bilddaten assoziiert ist, mit dem Vertrauenswert, der mit der Vorhersage hinsichtlich der Bilddaten assoziiert ist; und
wenn eine Differenz zwischen dem Vertrauenswert, der mit der Vorhersage hinsichtlich der gestörten Bilddaten assoziiert ist, und dem Vertrauenswert, der mit der Vorhersage hinsichtlich der Bilddaten assoziiert ist, größer als ein, oder gleich einem vorbestimmten Schwellenwert ist, Ermitteln, dass die Bilddaten, die von der Kamera (215) empfangen werden, innerhalb des vorbestimmten Bereichs liegen;
wobei die Bildanalysesoftware (215) eine Software für maschinelles Lernen (220) umfasst, die trainiert wird zum Analysieren der Bilddaten, und wobei die Software für maschinelles Lernen (220) ein neuronales Faltungsnetzwerk umfasst.

2. System (100) nach Anspruch 1, wobei der elektronische Prozessor (200) konfiguriert ist zum, wenn die Bilddaten außerhalb des vorbestimmten Bereichs liegen und sich eine autonome Funktionalität eines Fahrzeugs (105) auf die Vorhersage hinsichtlich der Bilddaten stützt, Deaktivieren der autonomen Funktionalität.

3. System (100) nach Anspruch 1, wobei sich die Vorhersagen, die durch die Bildanalysesoftware (215) erzeugt werden, auf ein Erkennen und Klassifizieren von Objekten, Verkehrszeichen und Straßenmarkierungen in den Bilddaten beziehen.

4. Verfahren zum Ermitteln, ob Bilddaten innerhalb eines vorbestimmten Bereichs liegen, für den eine Bildanalysesoftware (215) zum Analysieren konfiguriert ist, wobei das Verfahren umfasst:
Empfangen, mit einem elektronischen Prozessor (200), der Bilddaten von der Kamera (115);
Verwenden der Bildanalysesoftware (215) zum Erzeugen einer Vorhersage hinsichtlich der Bilddaten und eines Vertrauenswertes, der mit der Vorhersage hinsichtlich der Bilddaten assoziiert ist;
Berechnen von Störungswerten, indem ein Vorzeichen eines Gradienten einer Kostenfunktion (∇ₓL(θ, x, y)) der Bildanalysesoftware (215) verwendet wird zum Erzeugen der Vorhersage in Bezug auf das Bild; und Multiplizieren einer Gewichtung (ε) mit dem Vorzeichen, wobei *x* die Eingangsbilddaten sind, *y* mögliche Klassifizierungen für die Bilddaten sind, und *θ* Parameter der Bildanalysesoftware sind, die verwendet werden, um die Vorhersage zu erzeugen;
Stören der Bilddaten unter Verwendung der Störungswerte;
Verwenden der Bildanalysesoftware (215) zum Erzeugen einer Vorhersage hinsichtlich der gestörten Bilddaten und eines Vertrauenswertes, der mit der Vorhersage hinsichtlich der gestörten Bilddaten assoziiert ist;
Vergleichen, mit dem elektronischen Prozessor (200), des Vertrauenswertes, der mit der Vorhersage hinsichtlich der gestörten Bilddaten assoziiert ist, mit dem Vertrauenswert, der mit der Vorhersage hinsichtlich der Bilddaten assoziiert ist; und
wenn eine Differenz zwischen dem Vertrauenswert, der mit der Vorhersage hinsichtlich der gestörten Bilddaten assoziiert ist, und dem Vertrauenswert, der mit der Vorhersage hinsichtlich der Bilddaten assoziiert ist, größer als ein, oder gleich einem vorbestimmten Schwellenwert ist, Ermitteln, dass die Bilddaten, die von der Kamera (115) empfangen werden, innerhalb des vorbestimmten Bereichs liegen;
wobei die Bildanalysesoftware (215) eine Software für maschinelles Lernen (220) umfasst, die trainiert wird zum Analysieren der Bilddaten, und wobei die Software für maschinelles Lernen (220) ein neuronales Faltungsnetzwerk umfasst.

5. Verfahren nach Anspruch 4, wobei das Verfahren ferner, wenn die Differenz zwischen dem Vertrauenswert, der mit der Vorhersage hinsichtlich der gestörten Bilddaten assoziiert ist, und dem Vertrauenswert, der mit der Vorhersage hinsichtlich der Bilddaten assoziiert ist, geringer als der vorbestimmte Schwellenwert ist, ein Ignorieren der Bilddaten von der Kamera (115) umfasst.

6. Verfahren nach Anspruch 4, wobei das Verfahren ferner ein Verwenden von Daten von alternativen Sensoren umfasst, um Vorhersagen zum Steuern einer autonomen Funktionalität eines Fahrzeugs (105) zu steuern, wenn die Bilddaten außerhalb des vorbestimmten Bereichs liegen.

7. Verfahren nach Anspruch 4, wobei sich die Vorhersagen, die durch die Bildanalysesoftware (215) erzeugt werden, auf ein Erkennen und Klassifizieren von Objekten, Verkehrszeichen und Straßenmarkierungen in den Bilddaten beziehen.

## Revendications

1. Système (100) pour déterminer si des données d'image se trouvent dans une plage prédéterminée que le logiciel d'analyse d'image (215) est configuré pour analyser, le système (100) comprenant :
une caméra (115) ; et
un processeur électronique (200), le processeur électronique (200) étant configuré pour :
recevoir les données d'image en provenance de la caméra (115) ;
en utilisant le logiciel d'analyse d'image (215), générer une prédiction concernant les données d'image et une valeur de confiance associée à la prédiction concernant les données d'image ;
calculer des valeurs de perturbation en déterminant un signe d'un gradient d'une fonction de coût (∇ₓL(θ, x, y)) du logiciel d'analyse d'image (215) utilisé pour générer la prédiction relative à l'image ;
multiplier un poids (ε) par le signe, où x correspond aux données d'image d'entrée, *y* correspond à des classifications possibles pour les données d'image, et *θ* correspond à des paramètres du logiciel d'analyse d'image utilisé pour générer la prédiction ;
perturber les données d'image en utilisant les valeurs de perturbation ;
en utilisant le logiciel d'analyse d'image (215), générer une prédiction concernant les données d'image perturbées et une valeur de confiance associée à la prédiction concernant les données d'image perturbées ;
comparer la valeur de confiance associée à la prédiction concernant les données d'image perturbées à la valeur de confiance associée à la prédiction concernant les données d'image ; et
lorsqu'une différence entre la valeur de confiance associée à la prédiction concernant les données d'image perturbées et la valeur de confiance associée à la prédiction concernant les données d'image est supérieure ou égale à une valeur seuil prédéterminée, déterminer que les données d'image reçues de la caméra (215) se trouvent dans la plage prédéterminée, le logiciel d'analyse d'image (215) comprenant un logiciel d'apprentissage automatique (220) entraîné pour analyser les données d'image et le logiciel d'apprentissage automatique (220) comprenant un réseau neuronal convolutif.

2. Système (100) selon la revendication 1, dans lequel le processeur électronique (200) est configuré pour, lorsque les données d'image se trouvent en dehors de la plage prédéterminée et qu'une fonctionnalité autonome d'un véhicule (105) est basée sur la prédiction concernant les données d'image, désactiver la fonctionnalité autonome.

3. Système (100) selon la revendication 1, dans lequel les prédictions générées par le logiciel d'analyse d'image (215) concernent la détection et la classification d'objets, de panneaux signalisation et de marquages routiers dans les données d'image.

4. Procédé permettant de déterminer si des données d'image se trouvent dans une plage prédéterminée que le logiciel d'analyse d'image (215) est configuré pour analyser, le procédé comprenant :
la réception des données d'image en provenance de la caméra (115), au moyen d'un processeur électronique (200) ;
en utilisant le logiciel d'analyse d'image (215), la génération d'une prédiction concernant les données d'image et d'une valeur de confiance associée à la prédiction concernant les données d'image ;
le calcul de valeurs de perturbation en déterminant un signe d'un gradient d'une fonction de coût (∇ₓL(θ, x, y)) du logiciel d'analyse d'image (215) utilisé pour générer la prédiction relative à l'image ; et
la multiplication d'un poids (ε) par le signe, où *x* correspond aux données d'image d'entrée, *y* correspond à des classifications possibles pour les données d'image, et *θ* correspond à des paramètres du logiciel d'analyse d'image utilisé pour générer la prédiction ;
la perturbation des données d'image en utilisant les valeurs de perturbation ;
en utilisant le logiciel d'analyse d'image (215), la génération d'une prédiction concernant les données d'image perturbées et d'une valeur de confiance associée à la prédiction concernant les données d'image perturbées ;
la comparaison, au moyen du processeur électronique (200), de la valeur de confiance associée à la prédiction concernant les données d'image perturbées à la valeur de confiance associée à la prédiction concernant les données d'image ; et
lorsqu'une différence entre la valeur de confiance associée à la prédiction concernant les données d'image perturbées et la valeur de confiance associée à la prédiction concernant les données d'image est supérieure ou égale à une valeur seuil prédéterminée, la détermination du fait que les données d'image reçues de la caméra (115) se trouvent dans la plage prédéterminée,
le logiciel d'analyse d'image (215) comprenant un logiciel d'apprentissage automatique (220) entraîné pour analyser les données d'image et le logiciel d'apprentissage automatique (220) comprenant un réseau neuronal convolutif.

5. Procédé selon la revendication 4, le procédé comprenant en outre, lorsque la différence entre la valeur de confiance associée à la prédiction concernant les données d'image perturbées et la valeur de confiance associée à la prédiction concernant les données d'image est inférieure à la valeur seuil prédéterminée, la non-prise en compte des données d'image provenant de la caméra (115).

6. Procédé selon la revendication 4, le procédé comprenant en outre l'utilisation de données provenant d'autres capteurs pour générer des prédictions pour commander la fonctionnalité autonome d'un véhicule (105), lorsque les données d'image se trouvent à l'extérieur de la plage prédéterminée.

7. Procédé selon la revendication 4, dans lequel les prédictions générées par le logiciel d'analyse d'image (215) concernent la détection et la classification d'objets, de panneaux de signalisation et de marquages routiers dans les données d'image.
